# FASCICULE DE BREVET EUROPEEN

(11) **EP 3 050 758 B1**
(45) Date de publication et mention de la délivrance du brevet: **18.04.2018**
(21) Numéro de dépôt: 15306996.8
(22) Date de dépôt: 14.12.2015
(51) Int. Cl.: B60R 19/24, B62D 25/08, B60R 19/34

(54) **SOUS-ENSEMBLE STRUCTUREL D'UN VÉHICULE AUTOMOBILE ET PROCÉDÉ DE MONTAGE DE CE SOUS-ENSEMBLE**
STRUKTURELLE UNTEREINHEIT EINES KRAFTFAHRZEUGS, UND MONTAGEVERFAHREN DIESES UNTERELEMENTS
STRUCTURAL SUBASSEMBLY OF A MOTOR VEHICLE AND METHOD FOR MOUNTING SAID SUBASSEMBLY

(30) Priorité: 27.01.2015 FR 1550612
(43) Date de publication de la demande: 03.08.2016
(73) Titulaire: Renault S.A.S., 92100 Boulogne-Billancourt (FR)
(72) Inventeur: BRILHAC, Vincent, 78950 Gambais (FR)

(56) Documents cités:
- EP-A1- 0 798 197
- WO-A1-2010/089489
- DE-A1- 10 110 332
- DE-A1-102005 031 723
- US-A1- 2012 086 237

## Description

### Domaine de l'invention :

La présente invention concerne un sous-ensemble structurel d'un véhicule automobile. L'invention se rapporte plus particulièrement à un sous-ensemble structurel comprenant une traverse choc qui s'étend suivant la direction transversale du véhicule. La traverse est reliée à chacune de ses extrémités à une paroi transversale sensiblement verticale de la structure du véhicule par l'intermédiaire d'un absorbeur de choc correspondant s'étendant suivant la direction longitudinale du véhicule. L'invention se rapporte également à un procédé de montage d'un tel sous-ensemble structurel.

### Etat de la technique :

La structure des véhicules automobiles est classiquement constituée dans la partie arrière du véhicule d'une traverse choc fixée à une paroi transversale verticale désignée « jupe » par l'homme de l'art. Des absorbeurs de chocs sont positionnés entre chaque extrémité de la traverse choc et la paroi transversale. Ces absorbeurs de chocs s'étendent suivant la direction longitudinale du véhicule et sont disposés dans l'alignement longitudinal d'autres éléments structurel du véhicule, notamment des longerons, situés à l'arrière de la paroi transversale, de façon à assurer une reprise d'effort efficace. Les absorbeurs visent à recevoir et à dissiper les efforts appliqués sur la traverse en cas de choc en s'appuyant sur les longerons du véhicule.
Les conditions de montage connues d'une traverse sur la paroi transversale (jupe) du véhicule ne donnent pas satisfaction. En effet la traverse est un élément de longueur importante qu'il est délicat de positionner et de maintenir correctement contre la paroi transversale (jupe) du véhicule préalablement à la fixation définitive. Le document DE10 2005 031 723 A1 révèle un sous-ensemble structurel selon le préambule de la revendication 1.

### But de l'invention :

L'invention a pour but de pallier tout ou partie des inconvénients précédents en proposant un sous ensemble structurel qui soit particulièrement adapté à un positionnement et un pré-maintien efficace de la traverse choc contre la paroi transversale (jupe) du véhicule.

### Objet de l'invention :

A cet effet, l'invention a pour objet un sous-ensemble structurel d'un véhicule automobile comprenant les caractéristiques de la revendication 1. La traverse choc peut ce fait être présentée, positionnée et maintenue facilement et efficacement contre la paroi transversale (jupe) du véhicule, de façon à pouvoir la fixer ensuite définitivement à l'aide de vis de serrage adaptée. Des gains notables sont observés en temps et en coût de montage, ainsi qu'en ergonomie.
Selon d'autres caractéristiques avantageuses de l'invention :
- la première platine d'extrémité est fixée à la paroi transversale par au moins quatre vis de fixation engagées dans des orifices correspondant ménagés dans ladite platine et coopérant avec des écrous à souder respectifs solidaires de la paroi transversale,
- la seconde platine d'extrémité est fixée à la paroi transversale par au moins cinq vis de fixation engagées dans des orifices correspondant ménagés dans ladite platine et coopérant avec des écrous à souder respectifs solidaires de la paroi transversale,
- les vis de fixation de la première platine d'extrémité sont engagées dans des orifices circulaires de ladite première platine dont le diamètre est adapté pour tolérer une dispersion géométrique suivant les directions transversale et verticale entre les platines et la paroi transversale, à l'exception d'un orifice agencé sur la seconde platine dont une forme oblongue s'étendant suivant la direction transversale autorise une dispersion géométrique suivant la direction transversale et assure une mise en position géométrique suivant la direction verticale entre la seconde platine et la paroi transversale,
- la seconde platine d'extrémité comporte une ouverture sensiblement rectangulaire dont un bord supérieur constitue l'arête coopérant avec le crochet de pré-maintien,
- la traverse choc est située à l'arrière du véhicule et est relié à une paroi arrière dénommée « jupe » constituant la paroi transversale.
L'invention a également pour objet un véhicule automobile comprenant un sous-ensemble structurel ayant tout ou partie des caractéristiques précédentes.
L'invention a encore pour objet un procédé de montage d'un sous-ensemble structurel d'un véhicule automobile comprenant les caractéristiques de la revendication 8.

### Exposé de l'invention :

L'invention sera mieux comprise à la lecture de la description suivante d'un exemple non limitatif de l'invention, et à la lumière des dessins annexés sur lesquels :
- la figure 1 représente une vue en perspective de la partie arrière d'un véhicule automobile, illustrant un sous-ensemble structurel selon l'invention,
- la figure 2 représente une autre vue en perspective, en éclaté, de l'ensemble structurel de la figure 1,
- la figure 3 représente une vue en perspective de la paroi transversale intégrée à l'ensemble structurel selon l'invention,
- les figures 4 et 5 sont des vues agrandies de détails de réalisation de la paroi transversale de la figure 3, illustrant plus précisément les zones de fixation des platines d'extrémités reliées à la traverse choc,
- la figure 6 est une autre vue en perspective du sous-ensemble structurel de la figure 1, et
- les figures 7 et 8 sont des vues agrandies du sous-ensemble structurel de la figure 1, illustrant la fixation des platines d'extrémité sur la paroi transversale (la traverse choc et un tronçon des absorbeurs situé du côté adjacent à la traverse n'étant pas représenté).

Pour les besoins de la description, les directions et orientations sont indiquées en référence au repère XYZ classiquement utilisé en conception automobile, dans lequel X est la direction longitudinale avant-arrière du véhicule, dirigé vers l'arrière, Y est la direction transversale au véhicule, dirigé vers la droite et Z la direction verticale dirigée vers le haut.
Les notions avant-arrière s'entendent par rapport au sens de marche normal du véhicule qui est dirigé vers l'avant.
Le terme « sensiblement » indique qu'un léger écart est admis par rapport à une position ou disposition nominale déterminée, tout en restant inclus dans le cadre de l'invention. Par exemple « sensiblement vertical » indique qu'un écart de l'ordre de 10° par rapport à une orientation strictement verticale est admise dans le cadre de l'invention.

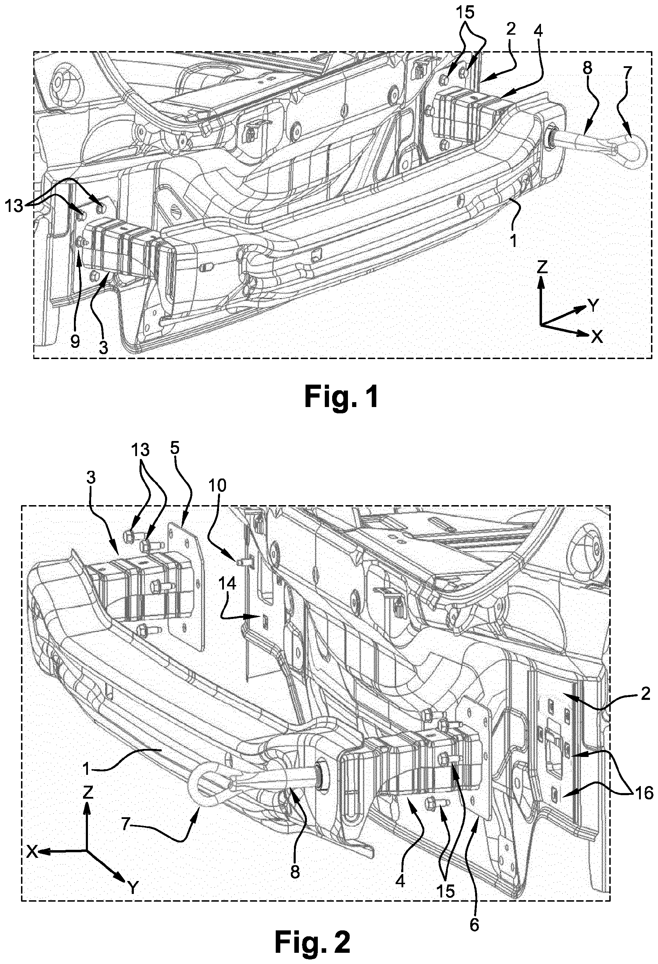

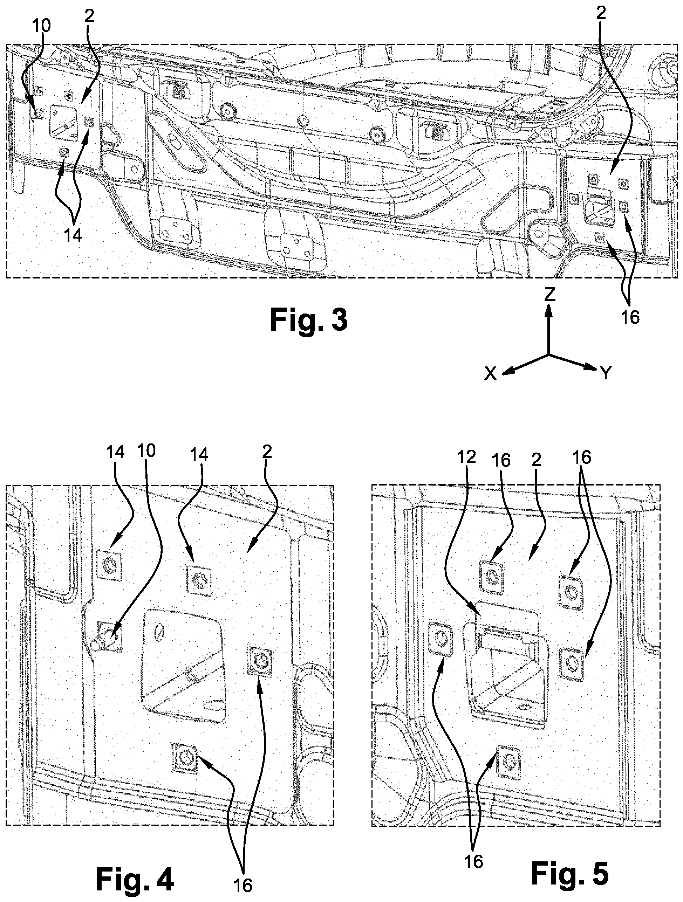

On a représenté aux figures 1 et 2 un sous-ensemble structurel d'un véhicule automobile. « Sous-ensemble structurel » désigne ici une partie de la structure du véhicule. Ce sous-ensemble structurel fait partie du soubassement du véhicule. On s'intéresse dans l'invention en particulier à la partie arrière du véhicule comprenant une traverse choc arrière 1 fixée sur une paroi transversale arrière 2 du véhicule, cette dernière étant dénommée « jupe » par l'homme de l'art.
Le sous-ensemble structurel selon l'invention comprend une traverse choc 1 s'étendant suivant la direction transversale Y du véhicule. Cette traverse choc 1 est typiquement une poutre en tôle emboutie. La traverse choc 1 est reliée à chacune de ses extrémités à une paroi transversale 2 sensiblement verticale de la structure du véhicule Cette paroi 2 s'étend donc essentiellement dans les directions YZ et est située en dessous d'une ouverture de coffre arrière du véhicule. La liaison entre la traverse choc 1 est la paroi 2 est assurée par l'intermédiaire de deux absorbeurs 3, 4 de choc, prenant appui sur une face avant de chaque extrémité de la traverse choc 1. Les absorbeurs 3, 4 de choc se présentent sous la forme de deux corps creux s'étendant sensiblement suivant la direction longitudinale X du véhicule. Ces absorbeurs de choc 3, 4 visent à assurer une reprise d'effort entre la traverse de choc et la paroi transversale 2 en situation de choc arrière du véhicule. Les absorbeurs 3, 4 sont destinés en se déformant à dissiper une partie de l'énergie reçue lors du choc.
Dans leur partie avant, opposée à la traverse choc 1, chaque absorbeur 3, 4 comprend une platine d'extrémité 5, 6 s'étendant sensiblement dans un plan transversal vertical YZ de façon à être appliqué en appui sur une surface correspondante de la paroi transversale 2 du véhicule. Dans le mode de réalisation illustré, un premier absorbeur 3 supportant une première platine d'extrémité 5 sont situés du côté gauche du véhicule tandis qu'un second absorbeur 4 supportant une seconde platine d'extrémité 6 sont situés du côté droite du véhicule, ce côté droit correspondant au côté dans lequel est implanté un anneau de remorquage 7. Cet anneau est situé à l'extrémité arrière d'une tige 8 s'étendant suivant la direction longitudinale X, dans l'alignement du second absorbeur 4. Cette tige 8 est vissée ou verrouillée directement sur le second absorbeur 4, en passant dans une ouverture ménagée localement dans la traverse choc 1.
Selon un aspect essentiel de l'invention, illustré aux figures 4, 5, 7, 8, la première platine d'extrémité 5 est munie d'un orifice 9 de pré-maintien enfilé sur une vis à souder 10 solidaire de la paroi transversale 2 tandis que la seconde platine d'extrémité 6 est munie d'une arête 11 coopérant avec un crochet de pré-maintien 12 situé sur la paroi transversale 2. La vis à souder 10 est orientée suivant la direction longitudinale X du véhicule. La partie libre de cette vis à souder 10, comprenant notamment un filetage est dirigée vers l'arrière du véhicule. L'orifice 9 de pré-maintien est de forme circulaire. Cette vis 10 coopérant avec l'orifice 9 bloque les dispersions dans les directions transversale Y et verticale Z, de façon à assurer le positionnement et le pré-maintien de la traverse 2 contre la paroi transversale 2.

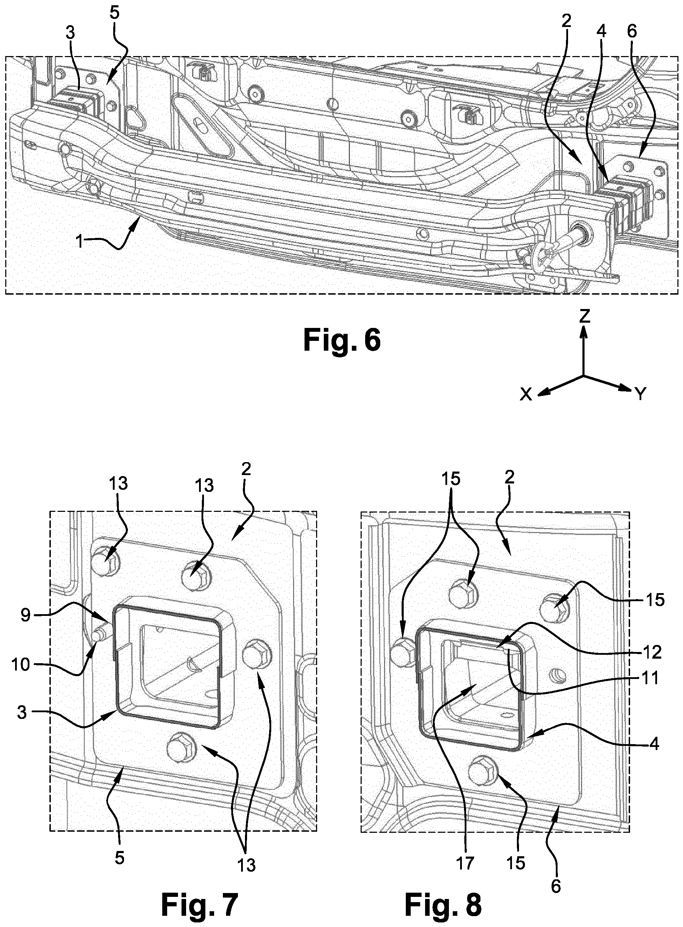

La seconde platine d'extrémité 6 comporte une ouverture 17 sensiblement rectangulaire, visible à la figure 8, dont un bord supérieur constitue l'arête 11 coopérant avec le crochet de pré-maintien 12 disposé en saillie vers l'arrière de la paroi transversale 2.
Le crochet de pré-maintien 12 comprend une surface d'appui sensiblement horizontale sur laquelle s'appuie l'arête 11 de la seconde platine d'extrémité 6 et un rebord plié sensiblement vertical formant une butée de retenue empêchant que la seconde platine d'extrémité 6 s'éloigne de la paroi transversale 2. Le crochet assure ainsi la retenue de la seconde platine d'extrémité 6. On note que la partie arrière du crochet doit pénétrer dans l'ouverture 17 de la seconde platine d'extrémité 6, la traverse choc 1 étant alors légèrement soulevée ou suspendue dans la zone du second absorbeur 4, à l'opposé d'un axe d'articulation matérialisé momentanément par la vis soudée 10. Dès lors que le bord plié vertical du crochet est introduit dans l'ouverture 17 et a franchi l'arête 11, la traverse 1 peut être relâchée suivant la direction verticale Z de façon que l'arête 11 repose en contact sur la surface d'appui du crochet 12.
L'arête 11 et le crochet 12 sont conformés de façon à autoriser une dispersion géométrique suivant la direction transversale Y entre la seconde platine d'extrémité et sa zone de fixation sur la paroi transversale 2 (jupe).
Outre le pré-maintien de la traverse choc 1 réalisé par d'une part par la vis soudée 10 coopérant avec l'orifice 9 et d'autre par part l'arête 11 retenue par le crochet 12, la première platine d'extrémité 5 et la seconde platine d'extrémité 6 sont par ailleurs fixées à la paroi transversale 2 par une pluralité de vis de fixation.
Dans le mode de réalisation illustré, la première platine d'extrémité 5 est fixée à la paroi transversale 2 par quatre vis de fixation 13 formant, avec la vis à souder 10, un ensemble réparti autour du premier absorbeur 3 dans la région périphérique de la première platine d'extrémité 5 (figures 1, 2, 7). Les vis de fixation 13 sont engagées dans des écrous à souder 14 (figures 3, 4) fixés rigidement à la paroi transversale 2 et intégrés à celle-ci pour former une surface plane sur laquelle s'appuie la première platine d'extrémité 5. Un écrou de serrage (non illustré) peut également être vissé sur l'embout fileté de la vis à souder 10 pour compléter la fixation.
En référence aux figures 1, 2, 8, la seconde platine d'extrémité 6 est quant à elle fixée à la paroi transversale 2 par cinq vis de fixation 15 engagées dans des écrous à souder 16 (figures 3, 5) fixés rigidement à la paroi transversale 2 et intégrés à celle-ci pour former une surface plane sur laquelle s'appuie la seconde platine d'extrémité 6. Les cinq vis de fixation 15 sont réparties autour du second absorbeur 4 dans la région périphérique de la seconde platine d'extrémité 6 (figure 8).
Les vis 13, 15 traversent des trous correspondant réalisés par poinçonnage sur les platines 5, 6 qui ont pour la plupart des formes circulaires dont le diamètre est suffisamment grand pour tolérer des dispersions suivant les directions transversale Y et verticale Z. L'indexation ou mise en référence géométrique de la seconde platine d'extrémité 6 par rapport à la paroi transversale 2 dans la direction transversale Y est assuré via la vis à souder 10 engagée dans l'orifice de pré-positionnement 9 de la première platine d'extrémité 5. Un orifice poinçonné sur la seconde platine 6, typiquement un orifice situé dans une région inférieure de la seconde platine 6 a une forme oblongue s'étendant suivant la direction transversale Y de façon à autoriser les dispersions en Y mais à assurer une mise en référence géométrique suivant la direction verticale Z entre la seconde platine 6 et la paroi transversale 2. La vis 15 traversant cet orifice oblong est vissée en premier après que la mise en position géométrique ait été réalisée entre la vis à souder 10 et l'orifice 9. L'ensemble des autres vis 13, 15 est vissé par la suite. Les écrous à souder 14, 16 ont typiquement une forme en carré dans l'exemple illustré, l'écrou en carré s'emboitant dans un trou ayant également une forme en carré ménagé dans l'épaisseur de la paroi transversale 2. Cet emboitement ajusté des écrous 14, 16 dans l'épaisseur de la paroi transversale 2 bloque les écrous et empêche toute rotation autour de leur axe.
Dans l'exemple de réalisation illustré sur les figures, le premier absorbeur 3 et la première platine d'extrémité sont situés du côté gauche du véhicule, tandis que le second absorbeur 4 et la seconde platine d'extrémité 6 sont situés du côté droit du véhicule.
Le procédé de montage du sous-ensemble structurel conforme à l'invention décrite précédemment est détaillé comme suit :
- dans une première étape, le premier absorbeur 3 situé à une première extrémité de la traverse 1 et comportant la première platine d'extrémité 5 munie d'un orifice 9 de pré-maintien est enfilé sur une vis à souder 10 solidaire de la paroi transversale 2, cette vis 10 et l'orifice 9 étant conformés pour assurer une mise en position géométrique suivant les directions transversale Y et verticale Z entre la première platine 5 et la paroi transversale 2.
- dans une seconde étape, le second absorbeur 4 situé à une seconde extrémité de la traverse 1 et comportant la seconde platine d'extrémité 6 munie d'une arête 11 est pivoté autour de la vis à souder 10 de façon que l'arête 11 coopère avec le crochet de pré-maintien 12 ménagé sur la paroi transversale 2, en s'appuyant sur celui-ci, le crochet de pré-maintien 12 comprend une surface d'appui sensiblement horizontale sur laquelle s'appuie l'arête 11 de la seconde platine d'extrémité 6 et un rebord plié sensiblement vertical formant une butée de retenue empêchant que la seconde platine d'extrémité 6 s'éloigne de la paroi transversale 2.
- les platines d'extrémité 5, 6 sont fixées à la paroi transversale 2 par une pluralité de vis de fixation 13, 15, dont une première vis engagée dans un orifice de la seconde platine de fixation 6 coopère avec ce dernier pour assurer une mise en position géométrique suivant la direction verticale Z entre la seconde platine de fixation 6 et la paroi transversale 2.
Bien entendu, l'invention n'est pas limitée aux modes ou variantes de réalisation décrits précédemment et comprends tous les équivalents techniques de ces moyens.
On peut notamment prévoir que le nombre de vis de fixation diffère de celui énoncé ci-dessus, sans sortir du cadre de l'invention.

## Revendications

1. Sous-ensemble structurel d'un véhicule automobile, comprenant une traverse choc (1) s'étendant suivant la direction transversale (Y) du véhicule, reliée à chacune de ses extrémités à une paroi transversale (2) sensiblement verticale de la structure du véhicule par l'intermédiaire d'un absorbeur de choc (3 ; 4) correspondant s'étendant suivant la direction longitudinale (X) du véhicule, où un premier absorbeur (3) situé à une première extrémité de la traverse (1) comporte une première platine d'extrémité (5) munie d'un orifice (9) de pré-maintien enfilé sur une vis à souder (10) solidaire de la paroi transversale (2) tandis qu'un second absorbeur (4) situé à une seconde extrémité de la traverse (1) comporte une seconde platine d'extrémité (6) munie d'une arête (11) coopérant avec un crochet de pré-maintien (12) situé sur la paroi transversale (2), les platines d'extrémité (5 ; 6) étant par ailleurs fixées à la paroi transversale (2) par une pluralité de vis de fixation (13; 15), **caractérisé en ce que** le crochet de pré-maintien (12) comprend une surface d'appui sensiblement horizontale sur laquelle s'appuie l'arête (11) de la seconde platine d'extrémité (6) et un rebord plié sensiblement vertical formant une butée de retenue empêchant que la seconde platine d'extrémité (6) s'éloigne de la paroi transversale (2).

2. Sous-ensemble structurel selon la revendication 1, **caractérisé en ce que** la première platine d'extrémité (5) est fixée à la paroi transversale (2) par au moins quatre vis de fixation (13) engagées dans des orifices correspondant ménagés dans ladite platine (5) et coopérant avec des écrous à souder (14) respectifs solidaires de la paroi transversale (2).

3. Sous-ensemble structurel selon la revendication 1 ou 2, **caractérisé en ce que** la seconde platine d'extrémité (6) est fixée à la paroi transversale (2) par au moins cinq vis de fixation (15) engagées dans des orifices correspondant ménagés dans ladite platine (2) et coopérant avec des écrous à souder (16) respectifs solidaires de la paroi transversale (2).

4. Sous-ensemble structurel selon la revendication 3, **caractérisé en ce que** les vis de fixation (13) de la première platine d'extrémité (5) sont engagées dans des orifices circulaires de ladite première platine (5) dont le diamètre est adapté pour tolérer une dispersion géométrique suivant les directions transversale (Y) et verticale (Z) entre les platines (5, 6) et la paroi transversale, à l'exception d'un orifice agencé sur la seconde platine (6) dont une forme oblongue s'étendant suivant la direction transversale (Y) autorise une dispersion géométrique suivant la direction transversale (Y) et assure une mise en position géométrique suivant la direction verticale (Z) entre la seconde platine (6) et la paroi transversale (2).

5. Sous-ensemble structurel selon l'une quelconque des revendications précédentes, **caractérisé en ce que** la seconde platine d'extrémité (6) comporte une ouverture (17) sensiblement rectangulaire dont un bord supérieur constitue l'arête (11) coopérant avec le crochet de pré-maintien (12).

6. Sous-ensemble structurel selon l'une quelconque des revendications précédentes, **caractérisé en ce que** la traverse choc (1) est située à l'arrière du véhicule et est relié à une paroi arrière dénommée « jupe » constituant la paroi transversale (2).

7. Véhicule automobile **caractérisé en ce qu'**il comprend un sous-ensemble structurel selon l'une quelconque des revendications précédentes.

8. Procédé de montage d'un sous-ensemble structurel d'un véhicule automobile, comprenant une traverse choc (1) s'étendant suivant la direction transversale (Y) du véhicule, reliée à chacune de ses extrémités à une paroi transversale (2) sensiblement verticale de la structure du véhicule par l'intermédiaire d'un absorbeur de choc (3 ; 4) correspondant s'étendant suivant la direction longitudinale (X) du véhicule, **caractérisé en ce qu'**il comprend les étapes suivantes :
- un premier absorbeur (3) situé à une première extrémité de la traverse (1) et comportant une première platine d'extrémité (5) munie d'un orifice (9) de pré-maintien est enfilé sur une vis à souder (10) solidaire de la paroi transversale (2), cette vis (10) et l'orifice (9) étant conformés pour assurer une mise en position géométrique suivant les directions transversale (Y) et verticale (Z) entre la première platine (5) et la paroi transversale (2),
- un second absorbeur (4) situé à une seconde extrémité de la traverse (1) et comportant une seconde platine d'extrémité (6) munie d'une arête (11) est pivoté autour de la vis à souder (10) de façon que l'arête (11) coopérant avec un crochet de pré-maintien (12) ménagé en saillie sur la paroi transversale (2), en s'appuyant sur celui-ci, le crochet de pré-maintien (12) comprenant une surface d'appui sensiblement horizontale sur laquelle s'appuie l'arête (11) de la seconde platine d'extrémité (6) et un rebord plié sensiblement vertical formant une butée de retenue empêchant que la seconde platine d'extrémité (6) s'éloigne de la paroi transversale (2),
- les platines d'extrémité (5 ; 6) sont fixées à la paroi transversale (2) par une pluralité de vis de fixation (13 ; 15), dont une première vis engagée en premier dans un orifice de la seconde platine de fixation (6) coopère avec ce dernier pour assurer une mise en position géométrique suivant la direction verticale (Z) entre la seconde platine de fixation (6) et la paroi transversale (2).

## Patentansprüche

1. Struktur-Teileinheit eines Kraftfahrzeugs, die einen sich in Querrichtung (Y) des Fahrzeugs erstreckenden Stoßquerträger (1) enthält, der an jedem seiner Enden mit einer im Wesentlichen senkrechten Querwand (2) der Struktur des Fahrzeugs über einen entsprechenden Stoßabsorber (3; 4) verbunden ist, der sich gemäß der Längsrichtung (X) des Fahrzeugs erstreckt,
wobei ein an einem ersten Ende des Querträgers (1) befindlicher erster Absorber (3) eine erste Endplatte (5) aufweist, die mit einer Öffnung für den vorläufigen Halt (9) versehen ist, die auf eine fest mit der Querwand (2) verbundene Schweißschraube (10) aufgeschoben wird, während ein an einem zweiten Ende des Querträgers (1) befindlicher zweiter Absorber (4) eine zweite Endplatte (6) aufweist, die mit einer Kante (11) versehen ist, die mit einem an der Querwand (2) befindlichen Haken für den vorläufigen Halt (12) zusammenwirkt, wobei die Endplatten (5; 6) außerdem durch eine Vielzahl von Befestigungsschrauben (13; 15) an der Querwand (2) befestigt sind, **dadurch gekennzeichnet, dass** der Haken für den vorläufigen Halt (12) eine im Wesentlichen waagrechte Auflagefläche, auf die sich die Kante (11) der zweiten Endplatte (6) auflegt, und eine umgebogene, im Wesentlichen senkrechte Randleiste enthält, die einen Rückhalteanschlag bildet, der verhindert, dass die zweite Endplatte (6) sich von der Querwand (2) entfernt.

2. Struktur-Teileinheit nach Anspruch 1, **dadurch gekennzeichnet, dass** die erste Endplatte (5) an der Querwand (2) durch mindestens vier Befestigungsschrauben (13) befestigt ist, die in in der Platte (5) ausgesparte entsprechende Öffnungen eingeführt werden und mit jeweiligen fest mit der Querwand (2) verbundenen Schweißmuttern (14) zusammenwirken.

3. Struktur-Teileinheit nach Anspruch 1 oder 2, **dadurch gekennzeichnet, dass** die zweite Endplatte (6) an der Querwand (2) durch mindestens fünf Befestigungsschrauben (15) befestigt ist, die in in der Platte (2) ausgesparte entsprechende Öffnungen eingeführt werden und mit jeweiligen fest mit der Querwand (2) verbundenen Schweißmuttern (16) zusammenwirken.

4. Struktur-Teileinheit nach Anspruch 3, **dadurch gekennzeichnet, dass** die Befestigungsschrauben (13) der ersten Endplatte (5) in kreisförmige Öffnungen der ersten Platte (5) eingeführt werden, deren Durchmesser geeignet ist, um eine geometrische Streuung gemäß der Querrichtung (Y) und der senkrechten Richtung (Z) zwischen den Platten (5, 6) und der Querwand zu tolerieren, mit Ausnahme einer Öffnung, die auf der zweiten Platte (6) ausgespart ist, von der eine sich gemäß der Querrichtung (Y) erstreckende längliche Form eine geometrische Streuung gemäß der Querrichtung (Y) erlaubt und eine geometrische Positionierung gemäß der senkrechten Richtung (Z) zwischen der zweiten Platte (6) und der Querwand (2) gewährleistet.

5. Struktur-Teileinheit nach einem der vorhergehenden Ansprüche, **dadurch gekennzeichnet, dass** die zweite Endplatte (6) eine im Wesentlichen rechtwinklige Öffnungsfläche (17) aufweist, von der ein oberer Rand die Kante (11) bildet, die mit dem Haken für den vorläufigen Halt (12) zusammenwirkt.

6. Struktur-Teileinheit nach einem der vorhergehenden Ansprüche, **dadurch gekennzeichnet, dass** der Stoßquerträger (1) sich an der Rückseite des Fahrzeugs befindet und mit einer "Schürze" genannten Rückwand verbunden ist, die die Querwand (2) bildet.

7. Kraftfahrzeug, **dadurch gekennzeichnet, dass** es eine Struktur-Teileinheit nach einem der vorhergehenden Ansprüche enthält.

8. Verfahren zur Montage einer Struktur-Teileinheit eines Kraftfahrzeugs, die einen sich gemäß der Querrichtung (Y) des Fahrzeugs erstreckenden Stoßquerträger (1) enthält, der an jedem seiner Enden mit einer im Wesentlichen senkrechten Querwand (2) der Struktur des Fahrzeugs über einen entsprechenden Stoßabsorber (3; 4) verbunden ist, der sich gemäß der Längsrichtung (X) des Fahrzeugs erstreckt, **dadurch gekennzeichnet, dass** es die folgenden Schritte enthält:
- ein an einem ersten Ende des Querträgers (1) befindlicher und eine mit einer Öffnung für den vorläufigen Halt (9) versehene erste Endplatte (5) aufweisender erster Absorber (3) wird auf eine fest mit der Querwand (2) verbundene Schweißschraube (10) aufgeschoben, wobei diese Schraube (10) und die Öffnung (9) gestaltet sind, um eine geometrische Positionierung gemäß der Quer- (Y) und senkrechten Richtung (Z) zwischen der ersten Platte (5) und der Querwand (2) zu gewährleisten,
- ein an einem zweiten Ende des Querträgers (1) befindlicher und eine mit einer Kante (11) versehene zweite Endplatte (6) aufweisender zweiter Absorber (4) wird so um die Schweißschraube (10) geschwenkt, dass die Kante (11) mit einem auf der Querwand (2) vorspringend angeordneten Haken für den vorläufigen Halt (12) zusammenwirkend, indem sie sich auf diesen auflegt, wobei der Haken für den vorläufigen Halt (12) eine im wesentlichen waagrechte Auflagefläche, auf die sich die Kante (11) der zweiten Endplatte (6) auflegt, und eine im Wesentlichen senkrechte umgebogene Randleiste enthält, die einen Rückhalteanschlag bildet, der verhindert, dass die zweite Endplatte (6) sich von der Querwand (2) entfernt,
- die Endplatten (5; 6) an der Querwand (2) durch eine Vielzahl von Befestigungsschrauben (13; 15) befestigt werden, von denen eine als erste in eine Öffnung der zweiten Befestigungsplatte (6) eingeführte Schraube mit letzterer zusammenwirkt, um eine geometrische Positionierung gemäß der senkrechten Richtung (Z) zwischen der zweiten Befestigungsplatte (6) und der Querwand (2) zu gewährleisten.

## Claims

1. Structural subassembly of a motor vehicle, comprising an impact crossmember (1) extending in the transverse direction (Y) of the vehicle and connected at each of its ends to a substantially vertical transverse wall (2) of the structure of the vehicle via a corresponding shock absorber (3; 4) extending in the longitudinal direction (X) of the vehicle, wherein a first absorber (3) situated at a first end of the crossmember (1) comprises a first end plate (5) provided with a pre-holding orifice (9) slipped over a welding bolt (10) secured to the transverse wall (2), whereas a second absorber (4) situated at a second end of the crossmember (1) comprises a second end plate (6) provided with an edge (11) cooperating with a pre-holding hook (12) situated on the transverse wall (2), the end plates (5; 6) being moreover fastened to the transverse wall (2) by a plurality of fastening bolts (13; 15), **characterized in that** the pre-holding hook (12) comprises a substantially horizontal bearing surface on which the edge (11) of the second end plate (6) bears and a substantially vertical folded lip forming a retaining stop preventing the second end plate (6) from moving away from the transverse wall (2).

2. Structural subassembly according to Claim 1, **characterized in that** the first end plate (5) is fastened to the transverse wall (2) by at least four fastening bolts (13) engaged in corresponding orifices formed in said plate (5) and cooperating with respective welding nuts (14) secured to the transverse wall (2).

3. Structural subassembly according to Claim 1 or 2, **characterized in that** the second end plate (6) is fastened to the transverse wall (2) by at least five fastening bolts (15) engaged in corresponding orifices formed in said plate (2) and cooperating with respective welding nuts (16) secured to the transverse wall (2).

4. Structural subassembly according to Claim 3, **characterized in that** the fastening bolts (13) for the first end plate (5) are engaged in circular orifices of said first plate (5) of which the diameter is adapted to tolerate a geometric spread in the transverse (Y) and vertical (Z) directions between the plates (5, 6) and the transverse wall, with the exception of an orifice arranged in the second plate (6) of which an oblong shape extending in the transverse direction (Y) allows a geometric spread in the transverse direction (Y) and ensures a geometric positioning in the vertical direction (Z) between the second plate (6) and the transverse wall (2).

5. Structural subassembly according to any one of the preceding claims, **characterized in that** the second end plate (6) comprises a substantially rectangular opening (17) of which an upper edge constitutes the edge (11) cooperating with the pre-holding hook (12).

6. Structural subassembly according to any one of the preceding claims, **characterized in that** the impact crossmember (1) is situated at the rear of the vehicle and is connected to a rear wall, termed "skirt", constituting the transverse wall (2).

7. Motor vehicle, **characterized in that** it comprises a structural subassembly according to any one of the preceding claims.

8. Method for mounting a structural subassembly of a motor vehicle, comprising an impact crossmember (1) extending in the transverse direction (Y) of the vehicle and connected at each of its ends to a substantially vertical transverse wall (2) of the structure of the vehicle via a corresponding shock absorber (3; 4) extending in the longitudinal direction (X) of the vehicle, **characterized in that** it comprises the following steps:
- a first absorber (3) situated at a first end of the crossmember (1) and comprising a first end plate (5) provided with a pre-holding orifice (9) is slipped over a welding bolt (10) secured to the transverse wall (2), this bolt (10) and the orifice (9) being configured to ensure a geometric positioning in the transverse (Y) and vertical (Z) directions between the first plate (5) and the transverse wall (2),
- a second absorber (4) situated at a second end of the crossmember (1) and comprising a second end plate (6) provided with an edge (11) is pivoted about the welding bolt (10) in such a way that the edge (11) cooperating with a pre-holding hook (12) formed in a projecting manner on the transverse wall (2), by bearing thereon, the pre-holding hook (12) comprising a substantially horizontal bearing surface on which the edge (11) of the second end plate (6) bears and a substantially vertical folded lip forming a retaining stop preventing the second end plate (6) from moving away from the transverse wall (2),
- the end plates (5; 6) are fastened to the transverse wall (2) by a plurality of fastening bolts (13; 15) of which a first bolt, engaged first in an orifice of the second fastening plate (6), cooperates with said orifice to ensure a geometric positioning in the vertical direction (Z) between the second fastening plate (6) and the transverse wall (2).
